**Europäisches Patentamt**

**European Patent Office**

**Office européen des brevets**

(19)

(11) Veröffentlichungsnummer: **0 116 107 B1**

(12) # EUROPÄISCHE PATENTSCHRIFT

(45) Veröffentlichungstag der Patentschrift:
**09.12.87**

(51) Int. Cl.⁴: **F 22 B 37/00,** F 16 L 55/18

(21) Anmeldenummer: **83104055.5**

(22) Anmeldetag: **26.04.83**

(54) Vorrichtung zur Prüfung und/oder zur Reparatur von Dampferzeugerrohren.

(30) Priorität: **08.01.83 DE 3300460**

(43) Veröffentlichungstag der Anmeldung:
**22.08.84 Patentblatt 84/34**

(45) Bekanntmachung des Hinweises auf die Patenterteilung:
**09.12.87 Patentblatt 87/50**

(84) Benannte Vertragsstaaten:
**BE CH DE FR IT LI NL SE**

(56) Entgegenhaltungen:
**EP - A - 0 004 275**
**EP - A - 0 004 853**
**US - A - 4 216 893**
**US - A - 4 222 699**

(73) Patentinhaber: **BROWN BOVERI REAKTOR GmbH,
Dudenstrasse 44, D-6800 Mannheim 1 (DE)**

(72) Erfinder: **Förch, Heiko, Ing. grad., Rüdiger Strasse 19,
D-6701 Otterstadt (DE)**
Erfinder: **Mehr, Lothar, Grubenweg 11,
D-6840 Lampertheim (DE)**
Erfinder: **Vermaat, Huibrecht Pieter, Waaldrift 12,
NL-3235 AV Rockanje (NL)**

(74) Vertreter: **Dahlmann, Gerhard, Dipl.-Ing. et al, c/o Brown
Boveri & Cie., AG Zentralbereich ZPT/P Postfach 351,
D-6800 Mannheim (DE)**

## Beschreibung

Die Erfindung betrifft eine Vorrichtung nach dem Oberbegriff des Anspruchs 1.

Bei einer derartigen, in der DE-A 3 244 384 (veröffentlicht am 7.6.84) beschriebenen Vorrichtung behindern die einem Spreizfinger zugeordneten pneumatischen Spannelemente die Bewegung der die Prüfgeräte tragenden und parallel zum Rohrboden erstreckten Schwenkarme. Weiterhin kann es trotz in Lösungsstellung befindlichem Spreizfingerstössel vorkommen, dass sich die Spreizfingerspannhülse nicht löst und eine Entnahme des Standbeines bzw. der Spannelemente erschwert. Lässt sich aufgrund eines solchen Vorfalls oder einer Störung des Spreizfingerstösselantriebs die Spanneinrichtung nicht aus dem Rohr des Dampferzeuger-Rohrbodens lösen, so ist ein Ausbau des Standbeines wegen seiner Verbindung mit dem Spannelement nur durch Betreten der strahlengefährdeten Dampferzeugerkammer unter erschwerten Bedingungen zu erreichen. Aber selbst nach der Entfernung des Standbeines lässt sich ein verklemmtes Spannelement nur nach seiner Beschädigung und gegebenenfalls unter Strahlengefährdung für das Bedienungspersonal ausbauen.

Es ist daher die Aufgabe der Erfindung, eine Vorrichtung der eingangs genannten Art anzugeben, die eine ungehinderte Bewegung des Schwenkarmes zulässt, ein zuverlässiges Zurückgehen der Spreizfingerspannhülse in ihre entspannte Stellung sicherstellt und das Lösen und Entfernen eines Spannelements nach vorheriger Trennung vom Standbein in einfacher und ungefährlicher Weise für das Bedienungspersonal ermöglicht.

Gelöst wird diese Aufgabe durch die im Kennzeichen des Anspruchs 1 angegebenen Merkmale.

Die vorgeschlagene Lösung erhöht die Zuverlässigkeit der Vorrichtung und verbessert deren Handhabung unter Vermeidung von Strahlenschäden für das Bedienungspersonal.

Das Antriebselement für den Spreizfingerstössel ist vorzugsweise ein Druckluftmotor, wobei ein Kragen eines Kupplungsflansches des Spannelements in das Standbein ragt und den Druckluftmotor trägt.

Damit wurde die Befestigung des Druckluftmotors und die Verbindung zwischen dem Spannelement und dem Standbein auf besonders vorteilhafte Weise integriert.

Eine vorteilhafte Ausbildung der Vorrichtung sieht vor, dass zur Umsetzung der Drehbewegung des Druckluftmotors in eine axiale Bewegung des Spreizfingerstössels eine Hülse vorgesehen ist, die nach einer Seite über ein Innengewinde mit dem Spreizfingerstössel und nach der anderen Seite über ein Polygon mit der Antriebswelle des Druckluftmotors verbunden ist, und dass zwischen dem Innengewinde und der Spannhülse der Stössel von einem Stift durchsetzt ist, der mit seinen über den Stösseldurchmesser hinausragenden Enden in einem Langloch des die Spannhülse haltenden Elements geführt ist.

Diese Ausbildung hat den Vorteil, dass nach dem Lösen der Kupplungsverbindung zwischen Standbein und Spannelement das Polygon freiliegt und durch ein Werkzeug, das über eine Stange von dem Mannloch der Dampferzeugerkammer aus bedienbar ist, das Spannelement von Hand entfernt werden kann.

Vorzugsweise ist das die Spannhülse an ihrem dem Rohrboden abgewandten Ende haltende Element mittels einer Überwurfmutter mit dem Kupplungsflansch des Spannelements verbunden. Dabei übergreift die Überwurfmutter den im Halteelement befindlichen Schlitz und sichert somit den den Spreizfingerstössel durchsetzenden Stift vor dem Herausfallen.

Eine besondere Ausgestaltung des am Spreizfingerstössel befestigten Halteelements sieht vor, dass sein grösster Aussendurchmesser kleiner ist als der Innendurchmesser eines zu prüfenden Rohres und dass das Halteelement in seinem die Spannhülse übergreifenden Bereich einen Innenkegel mit der gleichen Steigung besitzt wie sie ein Aussenkegel der Spannhülse aufweist.

Das Halteelement hat neben seiner Rückholfunktion für die Spannhülse gleichzeitig noch eine Zentrierfunktion beim Einführen des Spannelements in ein Rohr des Rohrbodens.

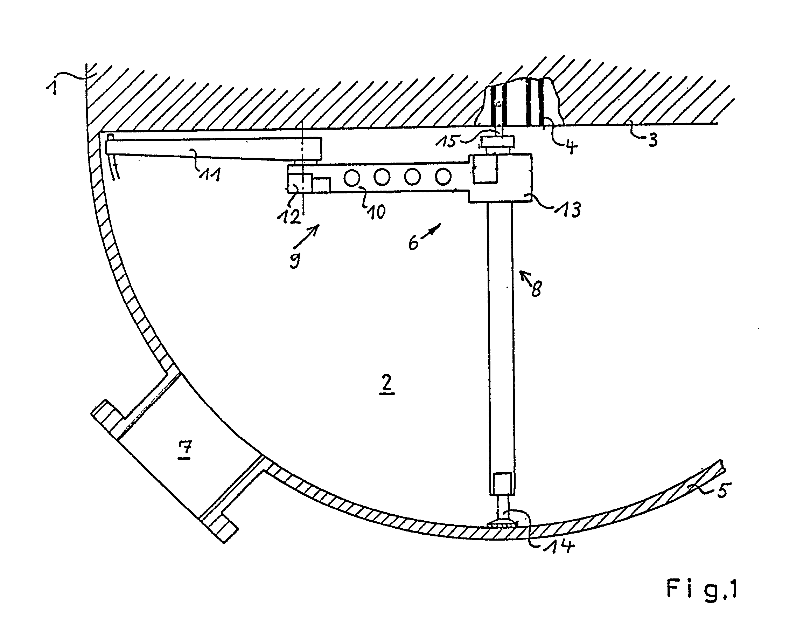

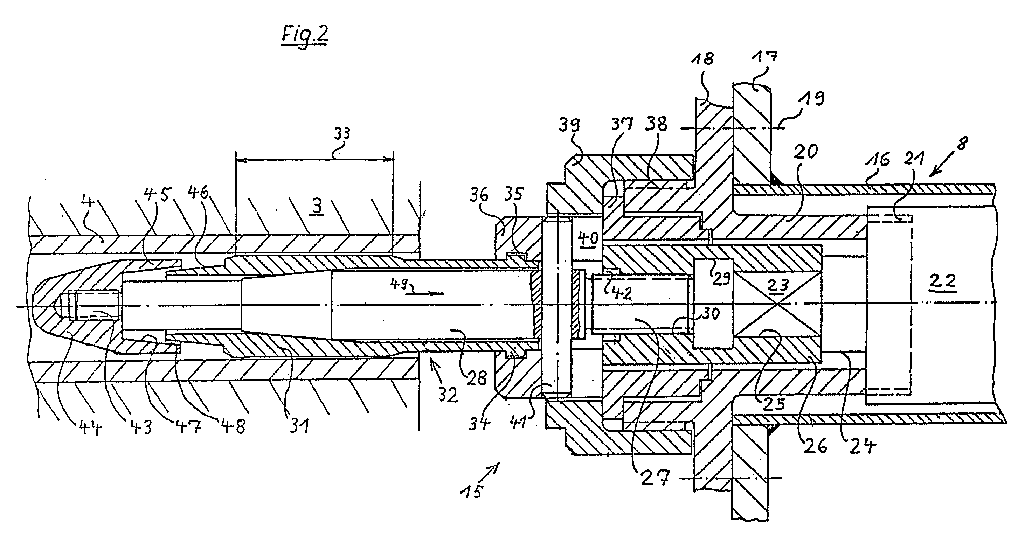

Anhand der Zeichnungen Fig. 1 und 2 wird ein Ausführungsbeispiel der Vorrichtung beschrieben. Dabei zeigen die

Fig. 1 eine Dampferzeugerkammer mit der darin angeordneten Vorrichtung und

Fig. 2 ein Spannelement der Vorrichtung in grösserem Massstab.

In der Fig. 1 ist in einem Teilbereich eines Querschnitts durch einen Dampferzeuger 1 einer nicht weiter dargestellten Kernreaktoranlage eine Dampferzeugerkammer 2 zu erkennen. Ein Rohrboden 3, in den eine grosse Anzahl Rohre 4 münden und ein halbkugelförmig ausgebildeter Boden 5 begrenzen die Kammer. Eine Vorrichtung 6 zur Prüfung und/oder zur Reparatur der in dem Rohrboden 3 geführten Rohre 4 wird durch das Mannloch 7 in die Kammer 2 eingebracht. Die Vorrichtung besteht aus einem rohrförmig ausgebildeten Standbein 8 und einem von diesem auskragenden Schwenkarm 9. Der Schwenkarm ist aus einem Hauptarm 10 und einem Geräteträger 11 gebildet, die über einen Antrieb 12 relativ zueinander bewegbar sind. Mit Hilfe eines kombinierten Hub- und Drehantriebs 13 ist der gesamte Schwenkarm relativ zum Standbein 8 drehbar und in axialer Richtung entlang desselben bewegbar. Ein anhand der Fig. 2 näher erläutertes Spannelement 15 dient zur Positionierung und Arretierung der Vorrichtung 6, die dann über einen im Standbein integrierten und vertikal bewegbaren Fuss 14 gegen den halbkugelförmig ausgebildeten Boden 5 abgestützt ist.

Die Fig. 2 zeigt das Spannelement 15 in grösserem Massstab. Das dem Rohrboden 3 zugewandte Ende des im wesentlichen aus einem Vierkantrohr 16 mit den Aussenmassen von 40 mm und einer Wanddicke von 1,5 mm bestehenden Standbeines 8, ist mit einem Kupplungsflansch 17 verschweisst, der mit einem Kupplungsflansch 18 des Spannelements 15 eine von ausserhalb der Kammer 2 lösbare Kupplungsverbindung 19 bildet. Ein in das Standbein 8 ragender Kragen 20 des Kupplungsflansches 18 trägt über eine Gewindeverbindung 21 einen Druckluftmotor 22, der ebenfalls im Hohlraum des Standbeines 8 angeordnet ist. Eine an ihrem freien Ende mit einem Vierkantzapfen 23 versehene Antriebswelle 24 des Druckluftmotors 22 greift in ein Innenvierkant 25 einer Hülse 26 ein, die an ihrem anderen Ende mit einem Gewinde versehen ist, das einen Gewindezapfen 27 eines Spreizfingerstössels 28 aufnimmt. Die Hülse 26 weist noch eine Freidrehung 29 auf, die das Innenvierkant 25 vom Gewinde 30 trennt. Die Drehbewegung der Antriebswelle 24 des Druckluftmotors 22 wird also über die Hülse 26 in eine hin- und hergehende Bewegung des Spreizfingerstössels 28 umgesetzt. Bei einem durch den Ausfall des Spreizfingerstösselantriebs oder durch sonstige Störungen hervorgerufenen Verbleiben des Spannelements 15 in Spannstellung ist nach dem Lösen der Kupplungsverbindung 19 zwischen Standbein 8 und Spannelement 15 die Hülse 26 über ein vom Mannloch aus bedienbares Werkzeug mit Vierkantzapfen von Hand drehbar und somit das Spannelement lösbar. Die Kupplungsverbindung zwischen Standbein und Spannelement kann als Schnellkupplung in Form eines Bajonettverschlusses ausgebildet sein und ist ebenfalls von ausserhalb der Kammer über das Mannloch lösbar. Eine aus drei einzelnen Backen 31 gebildete Spreizfingerspannhülse 32 umgibt den mittleren Bereich des Spreizfingerstössels. Sie besteht aus einzelnen Backen, damit sie in ihrem Spannbereich 33 auch bei unrunden Rohren einen optimalen Kontakt mit der Innenseite eines solchen Rohres eingehen kann. An ihren der Hülse 26 zugewandten Enden sind die Backen 31 mit einem Wulst 34 versehen, der in eine Ringnut 35 eines Halteelements 36 greift. Zwischen dem Wulst 34 und der Ringnut 35 des Halteelements 36 besteht in axialer und radialer Richtung ein Spiel von ca. einem Millimeter, so dass das Halteelement 36 die Backen 31 der Spannhülse 32 unter Belassung eines Spiels in ihrer Position hält. Eine Schulter 37 des Halteelements 36 ist mit einer in ein Gewindeteil 38 des Kupplungsflansches 18 greifenden Überwurfmutter 39 verspannt. Zwischen der Schulter 37 und der Ringnut 35 ist die Wand des Halteelements von zwei gegenüberliegenden Langlöchern 40 durchbrochen, in die ein den Spreizfingerstössel 28 durchsetzender Stift 41 ragt. Der Stift führt die Axialbewegung des Spreizfingerstössels 28 mit aus und verhindert mit seiner Führung im Langloch 40 ein Verdrehen des Spreizfingerstössels 28. Die Überwurfmutter 39 ist so ausgebildet, dass sie das Langloch 40 übergreift und dadurch den Stift 41 gegen Herausfallen sichert. Die Länge des Langlochs muss mindestens so gross wie der gewünschte Hubweg des Spreizfingerstössels sein. Die Freidrehungen 29, 42 in der Hülse 26 sind für eine ungehinderte Axialbewegung des Stössels 28 erforderlich. An seinem dem Rohrboden 4 zugewandten Ende trägt ein Gewindezapfen 43 des Spreizfingerstössels 28 ein weiteres Halteelement 44 für die Spannhülse 32. Es übergreift mit einem an seiner Innenseite kegelig ausgebildeten Kragen 45 den mit einem Aussenkegel 46 gleicher Steigung ausgebildeten Endbereich der Backen 31 der Spannhülse 32. Bei der in der Fig. 2 gezeigten Spannstellung des Spannelements 15 besteht zwischen dem Innenkegel 47 des Halteelements 44 und dem Aussenkegel 46 der Spannhülse noch ein Ringspalt 48 von ca. einem Millimeter Breite. Führt der Stössel 28 seine Öffnungsbewegung in Pfeilrichtung 49 aus, so drückt das Halteelement 44 zwangsläufig die Backen 31 radial nach innen und stellt somit das Lösen der Spannhülse 32 von der Innenwand eines Rohres 4 sicher. Die Kegelverbindung zwischen Spannhülse 32 und Stössel 28 stört diesen Vorgang nicht, da sie bei der Öffnungsbewegung des Stössels 28 ebenfalls gelöst wird. Das Standbein 8 kann somit zusammen mit dem Spannelement 15 problemlos aus der Kammer 2 entfernt werden. Beim Wiedereinführen des Spannelements 15 in ein Rohr des Rohrbodens 3 hat das dem Rohrboden zugewandte Halteelement 44 eine weitere Funktion. Es dient aufgrund seiner kegelig und abgerundet ausgebildeten Spitze sowie seinem nur ca. einen Millimeter dünner als ein Rohrinnendurchmesser ausgeführten Aussendurchmesser zusätzlich als Einführhilfe.

Bezugszeichenliste
| 1 | Dampferzeuger |
|---|---|
| 2 | Kammer |
| 3 | Rohrboden |
| 4 | Rohr |
| 5 | Boden |
| 6 | Vorrichtung |
| 7 | Mannloch |
| 8 | Standbein |
| 9 | Schwenkarm |
| 10 | Hauptarm |
| 11 | Geräteträger |
| 12 | Antrieb |
| 13 | Hub- und Drehantrieb |
| 14 | Fuss |
| 15 | Spannelement |
| 16 | Vierkantrohr |
| 17, 18 | Kupplungsflansch |
| 19 | Kupplungsverbindung |
| 20, 45 | Kragen |
| 21 | Gewindeverbindung |
| 22 | Druckluftmotor |
| 23 | Vierkantzapfen |
| 24 | Antriebswelle |
| 25 | Innenvierkant |
| 26 | Hülse |
| 27 | Gewindezapfen |
| 28 | Spreizfingerstössel |
| 29, 42 | Freidrehung |

30 Gewinde
31 Backen
32 Spreizfinger-Spannhülse
33 Spannbereich
34 Wulst
35 Ringnut
36, 44 Halteelement
37 Schulter
38 Gewindeteil
39 Überwurfmutter
40 Langloch
41 Stift
43 Gewindezapfen
46 Aussenkegel
47 Innenkegel
48 Ringspalt
49 Pfeilrichtung

**Patentansprüche**

1. Vorrichtung zur Prüfung und/oder zur Reparatur von Dampferzeugerrohren (4), die in einem Rohrboden (3) enden und über eine Dampferzeugerkammer (2) zugänglich sind, wobei ein rohrförmig ausgebildetes Standbein (8) – in Einbaustellung – an seinem zum Rohrboden (3) hingewandten Ende ein Spannelement (15) aufweist, das über wenigstens einen aus Spreizfingerstössel (28) und Spreizfingerspannhülse (32) bestehenden Spreizfinger in wenigstens einem Rohr (4) des Rohrbodens (3) festlegbar ist, und wobei vom Standbein (8) ein – in Einbaustellung – parallel zum Rohrboden (3) bewegbarer und die Prüf- oder Reparaturgeräte tragender Schwenkarm (9) auskragt, dadurch gekennzeichnet, dass das Spannelement (15) und das Standbein (8) über eine – im Einbauzustand von ausserhalb der Dampferzeugerkammer (2) lösbare – Kupplung (19) miteinander verbunden sind, dass der Spreizfingerstössel (28) über ein innerhalb des Standbeines angeordnetes Antriebselement (22) axial bewegbar ist, dass die Spreizfingerspannhülse (32) aus separaten Spannbacken (31) gebildet ist, die an ihren Enden umfangsseitig von einem ersten bzw. zweiten Halteelement (36, 44) umgeben sind, dass das erste Halteelement (44) an dem – in Einbaustellung – dem Rohrboden (3) zugewandten Ende des Spreizfingerstössels (28) befestigt ist, derart, dass in der Spannstellung des Spreizfingers zwischen der Spannhülse (32) und dem ersten Halteelement (44) ein Ringspalt (48) besteht und dass während der Öffnungsbewegung des Stössels (28) das erste Halteelement (44) unter Überwindung des Spaltes (48) an der Spannhülse (32) zur Anlage kommt.

2. Vorrichtung nach Anspruch 1, dadurch gekennzeichnet, dass das Antriebselement (22) ein Druckluftmotor ist, dass ein Kragen (20) eines Kupplungsflansches (18) des Spannelements (15) in das Standbein (8) ragt und den Druckluftmotor trägt.

3. Vorrichtung nach Anspruch 2, dadurch gekennzeichnet, dass zur Umsetzung der Drehbewegung des Druckluftmotors (22) in eine axiale Bewegung des Spreizfingerstössels (28) eine

Hülse (26) vorgesehen ist, die nach einer Seite über ein Innengewinde (30) mit dem Spreizfingerstössel (28) und nach der anderen Seite über ein Polygon (25) mit der Antriebswelle (24) des Druckluftmotors verbunden ist, und dass zwischen dem Innengewinde (30) und der Spannhülse (32) der Stössel (28) von einem Stift (41) durchsetzt ist, der mit seinen über den Stösseldurchmesser hinausragenden Enden in einem Langloch (40) des die Spannhülse (32) haltenden Elements (36) geführt ist.

4. Vorrichtung nach Anspruch 3, dadurch gekennzeichnet, dass das Halteelement (36) mittels einer Überwurfmutter (39) mit dem Kupplungsflansch (18) des Spannelements (15) verbunden ist und dass die Überwurfmutter das im Halteelement (36) befindliche Langloch (40) übergreift.

5. Vorrichtung nach Anspruch 1, dadurch gekennzeichnet, dass der grösste Aussendurchmesser des Halteelements (44) kleiner ist als der Innendurchmesser eines zu prüfenden Rohres (4) und dass das Halteelement (44) in seinem die Spannhülse (32) übergreifenden Bereich einen Innenkegel (47) mit der gleichen Steigung besitzt wie sie ein Aussenkegel (46) der Spannhülse (32) aufweist.

**Claims**

1. Device for testing and/or repairing steam generator tubes (4) which end in a tube plate (3) and are accessible via a steam generator chamber (2), in which arrangement a tubularly constructed leg of standard (8) exhibits in the installed position at its end facing the tube plate (3) a clamping element (15) which can be fixed via at least one expanding finger, which consists of expanding finger plunger (28) and expanding finger clamping sleeve (32), in at least one tube (4) of the tube plate (3) and a swivelling arm (9) which, in the installed position, can be moved parallel to the tube plate (3) and carries the test or repair devices projects from the leg of standard (8), characterized in that the clamping element (15) and the leg of standard (8) are connected to one another via a coupling (19) which, in the installed position can be disengaged from outside the steam generator chamger (2), that the expanding finger plunger (28) is axially movable via a drive element (22) arranged inside the leg of standard, that the expanding finger clamping sleeve (32) is formed of separate clamping cheeks (31) which are peripherally surrounded at their ends by a first and second holding element (36, 44), that the first holding element (44) is attached to the end of the expanding finger plunger (28) which, in the installed position, faces the tube plate (3), in such a manner that an annular gap (48) exists between the clamping sleeve (32) and the first holding element (44) in the clamping position of the expanding finger and that the first holding element (44) comes to rest against the clamping sleeve (32) whilst overcoming the gap (48) during the opening movement of the plunger (28).

2. Device according to Claim 1, characterized

4

in that the drive element (22) is a compressed-air motor, that a collar (20) of a coupling flange (18) of the clamping element (15) projects into the leg of standard (8) and carries the compressed-air motor.

3. Device according to Claim 2, characterized in that, for converting the rotary movement of the compressed-air motor (22) into an axial movement of the expanding finger plunger (28), a sleeve (26) is provided which is connected to one side via an inside thread (30) to the expanding finger plunger (28) and to the other side via a polygon (25) to the drive shaft (24) of the compressed-air motor and that, between the inside thread (30) and the clamping sleeve (32), the plunger (28) is penetrated by a pin (41) which is carried with its ends projecting past the plunger diameter in an elongated hole (40) of the element (36) holding the clamping sleeve (32).

4. Device according to Claim 3, characterized in that the holding element (36) is connected to the coupling flange (18) of the clamping element (15) by means of a coupling nut (39) and that the coupling nut extends over the elongated hole (40) located in the holding element (36).

5. Device according to Claim 1, characterized in that the largest outside diameter of the holding element (44) is smaller than the inside diameter of a tube (4) to be tested and that the holding element (44) has in its area extending over the clamping sleeve (32) an inside cone (47) having the same slope as is exhibited by an outside cone (46) of the clamping sleeve (32).

## Revendications

1. Dispositif de contrôle et/ou de réparation de tubes de générateur de vapeur (4) qui se terminent dans une plaque multitubulaire (3) et sont accessibles à travers une chambre de générateur de vapeur (2), dans lequel une jambe de force (8) en forme de tube comporte, en position d'insertion, sur son extrémité tournée vers la plaque multitubulaire (3) un élément de serrage (15) qui est fixable dans au moins un tube (4) de la plaque multitubulaire (3) par au moins un doigt d'écartement constitué par un poussoir de doigt d'écartement (28) et par une douille de serrage de doigt d'écartement (32) et dans lequel un bras pivotant (9) déplaçable, en position d'insertion, parallèlement à la plaque multitubulaire (3) et portant le ou les appareils de contrôle ou de réparation diverge de la jambe de force (8), caractérisé par le fait que l'élément de serrage (15) et la jambe de force (8) sont reliés entre eux par un accouplement (19) libérable de l'extérieur de la chambre de générateur de vapeur (2) à l'état d'insertion, que le poussoir de doigt d'écartement (28) est déplaçable axialement par un élément de commande (22) placé à l'intérieur de la jambe de force, que la douille de serrage (22) du doigt d'écartement est formée de joues de serrage séparées (31) qui, sur leurs extrémités, sont entourées par un premier ou un second élément de maintien (36, 44), le premier élément de maintien (44) étant fixé sur l'extrémité de poussoir de doigt d'écartement (28) tournée, en position d'insertion, vers la plaque multitubulaire (3) en sorte que, dans la position de serrage du doigt d'écartement, il existe une fente annulaire (48) entre la douille de serrage (32) et le premier élément de maintien (44) et que, pendant le mouvement d'ouverture du poussoir (28), ce même premier élément de maintien (44) vient s'appuyer contre la douille de serrage (32) en surmontant la fente (48).

2. Dispositif selon la revendication 1 caractérisé par le fait que l'élément de commande (22) est un moteur à air comprimé et qu'un collet (20) d'une bride d'accouplement (18) de l'élément de serrage (15) pénètre dans la jambe de force (8) et porte ledit moteur à air comprimé.

3. Dispositif selon la revendication 2 caractérisé par le fait que, pour convertir le mouvement de rotation du moteur à air comprimé (22) en un mouvement axial du poussoir de doigt d'écartement (28), il existe une douille (26) qui est reliée, d'un côté au poussoir de doigt d'écartement (28) par un filetage intérieur (30), de l'autre côté à l'arbre de commande (24) du moteur à air comprimé par un polygone (25), et que le poussoir (28) est traversé entre le filetage intérieur (30) et la douille de serrage (32) par une cheville (41) qui, par ses extrémités dépassant le diamètre du poussoir, est guidée dans une boutonnière (40) de l'élément de maintien (36) de la douille de serrage (32).

4. Dispositif selon la revendication 3 caractérisé par le fait que l'élément de maintien (36) est relié à la bride d'accouplement (18) de l'élément de serrage (15) au moyen d'un écrou à chapeau (39) et que ce dernier excède la boutonnière (40) de l'élément de serrage (36).

5. Dispositif selon la revendication 1 caractérisé par le fait que le diamètre extérieur maximal de l'élément de serrage (44) est inférieur au diamètre intérieur d'un tube (4) à contrôler et que ledit élément de maintien (44) présente dans sa zone chevauchant la douille de serrage (32) un cône intérieur (47) de même pente que celle d'un cône extérieur (46) de cette même douille de serrage (32).

Fig.1

_Fig.2_